# EUROPÄISCHE PATENTSCHRIFT

(11) **EP 2 130 105 B1**
(45) Veröffentlichungstag und Bekanntmachung des Hinweises auf die Patenterteilung: **23.06.2010**
(21) Anmeldenummer: 08734671.4
(22) Anmeldetag: 19.03.2008
(51) Int. Cl.: G05D 16/10

(54) **DRUCKVENTIL**
PRESSURE VALVE
SOUPAPE DE PRESSION

(30) Priorität: 20.03.2007 DE 102007013152
(43) Veröffentlichungstag der Anmeldung: 09.12.2009
(73) Patentinhaber: ROBERT BOSCH GMBH, 70469 Stuttgart (DE)
(72) Erfinder: SCHOPPEL, Georg, 97816 Lohr am Main (DE); BARRIGA, Daniel, 97854 Steinfeld-Hausen (DE)
(86) Internationale Anmeldenummer: PCT/EP2008/002197
(87) Internationale Veröffentlichungsnummer: WO 2008/113572

(56) Entgegenhaltungen:
- EP-A- 0 086 902
- EP-A- 1 734 295
- DE-A1- 3 532 592
- DE-A1- 10 004 975
- DE-A1- 19 615 789
- JP-A- 59 214 923

## Beschreibung

Die Erfindung betrifft ein Druckventil gemäß dem Oberbegriff des Patentanspruchs 1.

Druckventile, insbesondere vorgesteuerte 2-Wege oder 3-Wege Druckreduzierventile, werden in der hydraulischen Steuerungstechnik verwendet, wenn ein Druck an einem Verbraucheranschluss entsprechend einer Vorgabe möglichst konstant eingehalten werden soll. Anwendungsgebiete sind z.B. hydraulische Pressen, Spannvorrichtungen an Werkzeugmaschinen, etc. Abweichend von der Anforderung, einen Druck bei nahezu beliebigen Durchflussmengen konstant zu halten, besitzen reale Druckreduzierventile zumeist eine abfallende Regelkennlinie, d.h. mit zunehmender Durchflussmenge sinkt der Regeldruck ab - bei konstanter gehaltener Druckvorgabe. Dieses Verhalten wird den Strömungskräften zugeschrieben, welche den Steuerkolben mit steigender Durchflussmenge in Schließrichtung beaufschlagen.

Bei Gehäuseventilen konnte die Kennlinie verbessert und das Ventil zudem konstruktiv vereinfacht werden, indem ein Abgriff von Steuerdruckmittel aus einem Hohlraum im Regelkolben des Ventils erfolgt. In diesem Hohlraum herrscht bereits der geregelte Druck. Durch den Abgriff von Steuerdruckmittel an der Stirnseite des Hohlraumes erzielt man eine günstige Steuerdruckmittel-Kennlinie und verhindert ein Zuziehen des Regelkolbens bei hohen Durchflussmengen. Diese Ventilkonstruktion ist in der DE 196 15 789 A1 offenbart.

Bei Druckventilen versucht man weiterhin den Aufbau möglichst kostengünstig zu gestalten und durch ein breites Einsatzspektrum die Typenvielfalt zu verringern. Daher werden insbesondere Druckreduzierventile sowohl für die Stationärhydraulik als auch für die Mobilhydraulik zunehmend als Einschraubventile konzipiert. Ein solches, gattungsbildendes Druckventil ist z.B. in dem Datenblatt RD 18111-02/06.05 der Firma Bosch Rexroth AG dargestellt.

Die vorliegende Erfindung ist darauf gerichtet, ein hinsichtlich seiner Regeldruckkennlinie verbessertes Druckventil in Einschraubventiltechnik anzugeben.

Diese Aufgabe wird durch ein Druckventil mit den Merkmalen des Patentanspruchs 1 gelöst.

Erfindungsgemäß ist ein Druckventil mit einer Ventilbuchse und mit einem in der Ventilbuchse beweglich geführten Steuerkolben, durch den ein über die Ventilbuchse von einer Druckmittelquelle zu einem Verbraucher vorgesehener Druckmittelweg steuerbar ist, ausgestattet. Am Steuerkolben ist ein Bundabschnitt vorgesehen, durch den ein Öffnungsquerschnitt an einer drückmittelquellenseitigen Radialöffnung der Ventilbuchse veränderbar ist. Der Druckmittelweg stromab der Radialöffnung ist durch wenigstens einen sich axial durch den Bundabschnitt erstreckenden Kanal geführt. Ferner ist eine der Beaufschlagung des Steuerkolbens mit einem einstellbaren Steuerdruck dienende Vorsteueranordnung vorhanden, wobei ein Steuerdruckmittelzufuhrkanal mit einer Einlassöffnung am Steuerkolben in einem Bereich stromauf des Bundabschnitts vorgesehen ist.

Die Besonderheit ist es, dass der wenigstens eine sich axial erstreckende Kanal so dimensioniert ist, dass Druckmittel am Bundabschnitt anstaubar ist. Auf diese Weise lässt sich der Eingangsdruck am Steuerdruckmittelzufuhrkanal in Abhängigkeit von einer ansteigenden Durchflussmenge erhöhen. Folglich lässt sich der in der Steuerdruckkammer den Steuerkolben beaufschlagende Steuerdruck im Sinne einer Linearisierung der Druckmittelmenge - Regeldruck - Kennlinie beeinflussen. Hervorzuheben ist zudem die besonders einfache Konstruktion des Ventils. Gegenüber herkömmlichen Ventilen ist vornehmlich der Steuerkolben abgewandelt. Dieser lässt sich als einfacher zylindrischer Grundkörper bzw. als Stufenkolben darstellen. Somit ist eine einfache kosteneffiziente Herstellbarkeit eines Druckventils gemäß der vorliegenden Erfindung - bei gleichzeitig vorzüglichem Gleichdruckverhalten - gewährleistet.

Vorteilhafte Ausgestaltungen der vorliegenden Erfindung sind in den Unteransprüchen angegeben.

Gemäß einer bevorzugten Weiterbildung ist der Steuerkolben als gestufter Kolben ausgebildet, welcher sich ausgehend von dem ersten, vorgenannten Bundabschnitt in einen radial zurückspringenden Halsabschnitt und anschließend in einen zweiten Bundabschnitt axial fortsetzt. Ein solcher Steuerkolben ist einfach in der Herstellung und erlaubt die Herstellung der benötigten Kanäle durch einfache Bohrungen.

Vorzugsweise ist der Steuerkolben an beiden Bundabschnitten in der Ventilbuchse geführt, wodurch eine gute Abdichtung und eine zuverlässige Funktion erzielt wird.

Gemäß einer besonders bevorzugten Weiterbildung der vorliegenden Erfindung geht der Steuerdruckmittelzufuhrkanal von einer axial orientierten Fläche des zweiten Bundabschnitts oder von einem Bereich des Halsabschnitts, insbesondere der Mantelfläche, nahe des zweiten Bundabschnitts aus. Dies gewährleistet eine zuverlässige Versorgung der Vorsteueranordnung mit Steuerdruckmittel aus einem Bereich in dem gleichmäßige Druckverhältnisse herrschen.

Das Einsatzspektrum des ertindungsgemäßen Druckventils ist breiter, wenn dieses als 3-Wege Ventil ausgeführt ist, wobei gemäß einer vorteilhaften Bauform der zweite Bundabschnitt einen Öffnungsquerschnitt an einer mit einer Entlastungsleitung verbundenen Radialöffnung der Ventilbuchse steuert.

Eine besonders bevorzugte Ausgestaltung sieht dabei vor, dass ein zweiter Steuerdruckmittelzufuhrkanal vorgesehen ist, der eine Einlassöffnung an einer dem Halsabschnitt abgewandten Seite des ersten Bundabschnitts besitzt. Dies gewährleistet auch in einem Druckbegrenzungsbetrieb, bei dem Druckmittel aus dem Verbraucheranschluss zum Tank hin abgeführt wird, eine zuverlässige Versorgung der Vorsteueranordnung mit Steuerdruckmittel.

Vorzugsweise ist im zweiten Steuerdruckmittelzufuhrkanal ein Rückschlagventil angeordnet, welches gemäß seiner Durchlassrichtung einen Einstrom von Druckmittel an der Einlassöffnung des zweiten Steuerdruckmittelzufuhrkanals erlaubt. Im Druckreduzierbetrieb, bei dem Druckmittel dem Verbraucher von der Druckmittelquelle zugeführt wird, verhindert das Rückschlagventil aufgrund der Druckverhältnisse einen Einstrom von Steuerdruckmittel in den zweiten Steuerdruckmittelzufuhrkanal. In diesem Fall erfolgt die Steuerdruckmittelzufuhr nur durch den ersten Steuerdruckmittelzufuhrkanal, so dass die gewünschte Abhängigkeit der Steuerdruckmittelzufuhrmenge von der durch das Ventil geführten Durchflussmenge erhalten bleibt.

Die beiden Steuerdruckmittelzufuhrkanäle lassen sich besonders einfach fertigen, wenn der zweite Steuerdruckmittelzufuhrkanal in den ersten Steuerdruckmittelzufuhrkanal mündet. Vorzugsweise ist eine den Steuerkolben axial durchlaufende Bohrung abschnittsweise zur Ausbildung des ersten Steuerdruckmittelzufuhrkanals und des zweiten Steuerdruckmittelzufuhrkanals vorgesehen. Vorteilhaft ist es weiterhin, wenn die Einlassöffnung des ersten Steuerdruckmittelzufuhrkanals durch eine in die Axialbohrung mündende Radialbohrung gebildet ist.

Gemäß einer besonders bevorzugten Ausgestaltung sind in dem Bundabschnitt umlaufend mehrere durchgängige Axialbohrungen vorgesehen, die in einer dem Halsabschnitt zugewandten Ringfläche des Bundabschnitts münden. Bei dieser Bauart lässt sich der Gesamtquerschnitt der Kanäle durch den ersten Bundabschnitt sehr genau festlegen. Weiterhin lässt sich am Halsabschnitt eine große Einstromkammer für den Druckmittelzulauf über die Radialöffnung der Ventilbuchse ausbilden. Dies ermöglicht es, die Öffnung des Steuerdruckmittelzufuhrkanals in ausreichender Entfernung von der Steuerkante am ersten Bundabschnitt anzuordnen. Die Entnahme von Steuerdruckmittel erfolgt aus einem strömungsberuhigten Bereich. Die Druckverhältnisse an der Öffnung des Steuerdruckmittelzufuhrkanals sind insbesondere unabhängig von der Winkellage des Steuerkolbens.

Konstruktiv besonders einfach und kostengünstig in der Herstellung ist das Druckventil, wenn in dem Halsabschnitt eine durchgehende Radialbohrung ausgeführt ist, und wenn in dem ersten Bundabschnitt eine in die besagte Radialbohrung mündende Axialbohrung vorgesehen ist. Dabei wird der Durchmesser der Axialbohrung erfindungsgemäß geringer als der Durchmesser der Radialbohrung gewählt.

Gemäß einer besonders bevorzugten Ausgestaltung verursacht die Vorsteueranordnung bei einem Anstieg der ihr zugeführten Steuerdruckmittelmenge einen steigenden Steuerdruck. Auf diese Weise lassen sich die in Schließrichtung wirkenden Strömungskräfte unmittelbar kompensieren. Vorzugsweise ist die Vorsteueranordnung mit einem direkt betätigten Druckbegrenzungsventil ausgestattet. Ein solches Druckbegrenzungsventil ist kostengünstig und besitzt die gewünschte Kennlinie.

Nachfolgend wird die vorliegende Erfindung und deren Vorteile unter Bezugnahme auf die in den Figuren dargestellten Ausführungsbeispiele näher erläutert.
- Figur 1: ist eine Querschnittsdarstellung eines Druckventils mit einem gestuften Steuerkolben und kranzförmig angeordneten Axialbohrungen in dem verbraucheranschlussseitigen Bundabschnitt des Steuerkolbens,
- Figur 2: zeigt eine Variante eines der Figur 1 entsprechenden Druckventils, bei der der Steuerkolben in der verbraucheranschlussseitigen Stirnfläche eine zusätzliche Steuerdruckmitteleinlassöffnung besitzt,
- Figur 3: ist eine Querschnittsdarstellung eines Druckventils gemäß einem weiteren Ausführungsbeispiel der Erfindung, bei dem der Steuerkolben eine im Druckmittelweg angeordnete Radialbohrung-und eine Axialbohrung besitzt, und
- Figur 4: ist eine um 90° gedrehte Querschnittsdarstellung des in Figur 3 gezeigten Druckventils.

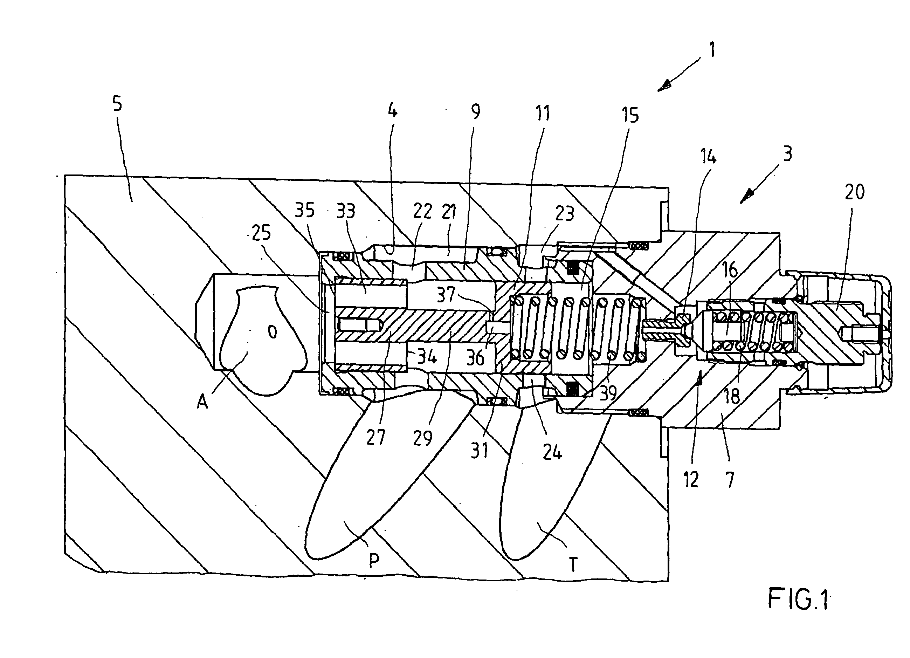

Gemäß Figur 1 ist ein 3-Wege Druckreduzierventil 1 als Einschraubventil 3 ausgeführt, welches zum Einbau in eine Einbaubohrung 4 eines Ventilblocks 5 vorgesehen ist. Der Ventilblock 5 besitzt in die Einbaubohrung 4 mündende Anschlussbohrungen, die einem Druckmittelquellenanschluss P, einem Tankanschluss T und einem Verbraucheranschluss A des Ventils 1 zugeordnet sind. Das Einschraubventil 3 umfasst, wie üblich, eine Befestigungshülse 7 und eine in der Befestigungshülse 7 gehaltene Ventilbuchse 9, in welcher ein Steuerkolben 11 beweglich geführt ist.

In der Befestigungshülse 7 ist ein Vorsteuerventil angeordnet. Das Vorsteuerventil ist als Druckbegrenzungsventil 12 in Sitzventilbauweise ausgeführt. Durch eine mit einer Dämpfungsdüse versehenen Sitzhülse 14 ist die fluidische Anbindung an einen Steuerdruckraum 15 gegeben. Ein Steuerkegel 16 ist durch eine Druckfeder 18 mit einer Kraft in Richtung der Sitzhülse 14 beaufschlagt. Der Öffnungsdruck des Druckbegrenzungsventils 12 lässt sich über die auf die Druckfeder 18 einwirkende Verstellhülse 20 einstellen.

Die Ventilbuchse 9 besitzt einen ersten Kranz an Radialbohrungen 22, die in einem Druckmittelzufuhrbereich 21 der Einbaubohrung 4 angeordnet sind, sowie einen zweiten Kranz an Radialbohrungen 24, die in einem Tankanschlussbereich 23 der Einbaubohrung 4 angeordnet sind. Die stirnseitige Öffnung 25 der Ventilhülse ist mit dem Verbraucheranschluss A fluidisch verbunden. Der in der Ventilbuchse 9 geführte Steuerkolben 11 ist in einen ersten Bundabschnitt 27, der der Öffnung 25 zugewandt ist, einen Halsabschnitt 29 und einen zweiten Bundabschnitt 31, der den Steuerdruckraum 15 begrenzt, axial untergliedert. Der erste Bundabschnitt 27 weist einen Kranz an axial ausgeführten Bohrungen 33 auf, die in einer dem Halsabschnitt 29 zugewandten Ringfläche 34 münden. Der zweite Bundabschnitt 31 ist auf seiner dem Steuerdruckraum 15 zugewandten Seite mit einer Vertiefung versehen. Am Grund der Vertiefung ist eine Axialbohrung 36 als Sacklochbohrung ausgeführt. Zusammen mit einer radial in den Halsabschnitt 29 in unmittelbarer Nähe des zweiten Bundabschnitts 31 eingebrachten Düsenbohrung 37 bildet die Axialbohrung 36 einen Steuerdruckmittelzufuhrkanal für den Steuerdruckraum 15. In dem Steuerdruckraum 15 ist eine Druckfeder 39 aufgenommen, die sich am Grund der Vertiefung des zweiten Bundabschnitts 31 und an einer Ringfläche der Befestigungshülse 7 abstützt. Diese Druckfeder 39 beaufschlagt den Steuerkolben mit einer in Richtung der Öffnung 25 gerichteten Kraft.

Nachfolgend wird die Funktion des in Figur 1 dargestellten Druckreduzierventils 1 erläutert. Der in dem Verbraucheranschluss A eingestellte Druck ist durch eine Kräftegleichgewichtsbedingung am Steuerkolben 11 festgelegt. Bei einem Druckmittelstrom von P nach A nimmt der Steuerkolben 11 eine Position ein, in der ein Gleichgewicht der im Sinne eines Schließens der Radialbohrungen 22 und der im Sinne eines Öffnens der Radialbohrungen 22 wirkenden Kräfte herrscht. Dies sind die vom Verbraucheranschluss A einwirkenden hydrostatischen Kräfte einerseits und die durch den Steuerdruck im Steuerdruckraum 15 verursachte Kraft sowie die Kraft der Druckfeder 39 andererseits. Somit regelt der Steuerkolben 11 den Druck im Verbraucheranschluss A gemäß der Vorgabe des Steuerdrucks und der Kraft der Druckfeder 39, die jedoch üblicherweise gering gewählt wird. Bei einem Druckmittelstrom von A nach T gilt das eben beschriebene Kräftegleichgewicht ebenso. Der Steuerkolben 11 nimmt dabei eine Position ein, bei der er einen Abfluss von Druckmittel an den Radialbohrungen 24 steuert. Bei dieser Druckmittelflussrichtung ist der Druck im Verbraucheranschluss A entsprechend des Steuerdrucks und der Kraft der Druckfeder 39 begrenzt.

In der Flussrichtung des Druckmittels von P nach A ergibt sich durch die Einschränkung des Durchflussquerschnitts an den Axialbohrungen 33 ein Druckgefälle über den ersten Bundabschnitt 27. Das Druckmittel wird stromauf des ersten Bundabschnitts 27 sozusagen angestaut. Die Erhöhung des Drucks auf der Halsseite des Steuerkolbens 11 gegenüber dem Verbraucheranschluss A ist dabei umso höher, je größer die fließende Druckmittelmenge ist. Ein höherer Druck am Halsabschnitt 29 des Steuerkolbens 11 bewirkt eine Erhöhung der durch die Düsenbohrung 37 in den Steuerdruckraum 15 einfließenden Steuerdruckmittelmenge. Aufgrund der ansteigenden Steuerdruckmittelmenge - Steuerdruck - Kennlinie des Druckbegrenzungsventils 12 erhöht sich mit der über den Weg P nach A fließenden Druckmittelmenge auch der Steuerdruck im Steuerdruckraum 15. Der erhöhte Steuerdruck verstärkt die im Sinne eines Öffnens der Radialbohrungen 22 wirkenden Kraft auf den Steuerkolben 11. Dies wirkt den in Schließrichtung wirkenden mit steigender Druckmittelmenge sich verstärkenden Strömungskräften entgegen. Auf diese Weise lässt sich eine nahezu konstante Druckmittelmenge - Regeldruck - Kennlinie des Druckreduzierventils 1 erzielen.

In Kenntnis der beschriebenen Erfindung ermittelt der Fachmann den benötigte Querschnitt der Axialbohrungen 33 und den benötigten Anstieg der Steuerdruckmittelmenge - Steuerdruck - Kennlinie des Druckbegrenzungsventils 12 durch im geläufige Berechungen oder Versuche.

Die Erfindung ist natürlich auch bei 2-Wege-Druckreduzierventilen ohne weiteres einsetzbar. Ein solches 2-Wege-Druckreduzierventil lässt sich einfach durch Verzicht auf den Tankanschluss und die zugeordneten Radialbohrungen 24 angeben. Die beschriebene Kompensation der Strömungskräfte in der Durchflussrichtung P nach A bleibt davon unberührt.

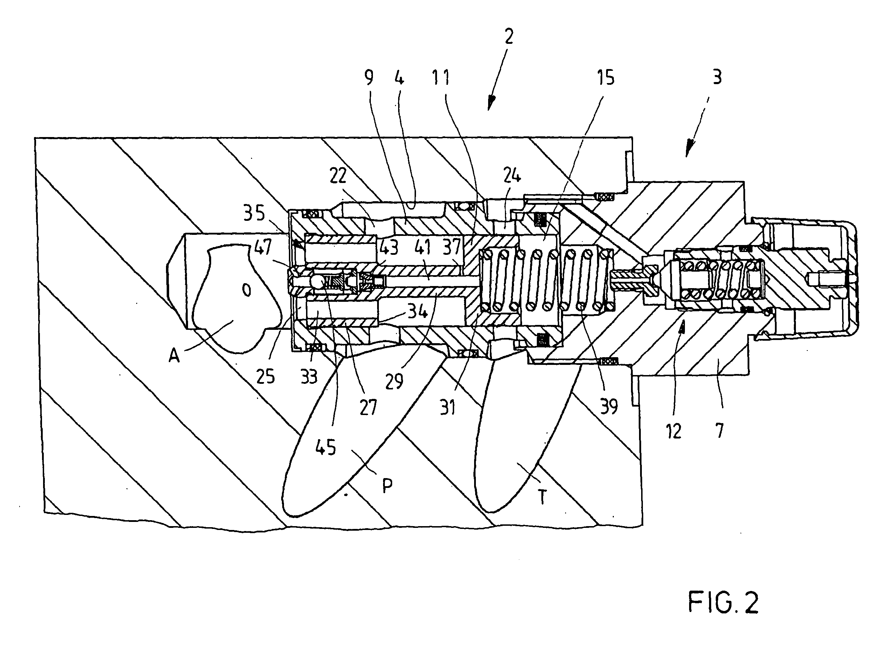

Eine Variante des in Figur 1 dargestellten Druckreduzierventils 1 ist in Figur 2 anhand des 3-Wege Druckreduzierventils 2 dargestellt. Dessen Aufbau entspricht weitestgehend dem Aufbau des Druckreduzierventils 1. Unterschiede bestehen lediglich in der Steuerdruckmittelzuführung. Es werden für gleiche Merkmale die gleichen Bezugszeichen verwendet. In der nachfolgenden Beschreibung des Druckreduzierventils 2 werden lediglich die besagten Unterschiede zum Druckreduzierventil 1 angegeben.

Im Gegensatz zu der als Sacklochbohrung ausgeführten Axialbohrung 36 ist bei dem Steuerkolben 11 des Druckreduzierventils 2 eine den Steuerkolben 11 auf seiner gesamten Länge durchlaufende gestufte Axialbohrung 41 vorhanden. In die Axialbohrung 41 mündet in unmittelbarer Nähe der Schulter des zweiten Bundabschnitts 31 die Düsenbohrung 37. Weiter in Richtung der der Öffnung 25 der Ventilbuchse 9 zugewandten Stirnseite 35 des Steuerkolbens 11 sind in der gestuften Axialbohrung 41 nacheinander ein Düseneinsatz 43, ein Rückschlagventil 45 sowie an der Mündungsöffnung der Axialbohrung 41 ein Einlassaufsatzstück 47 angeordnet.

Im Druckreduzierbetrieb, bei einer Flussrichtung des Druckmittels von P nach A, ist der Druck im Bereich des Halsabschnitts 29 aufgrund der Einschnürung des Druckmittelwegs durch die Axialbohrungen 33 etwas höher als der Druck am Verbraucheranschluss A, d.h. als am Einlassaufsatzstück 47. Das Rückschlagventil 45 bleibt daher geschlossen. Eine Zufuhr von Steuerdruckmittel in den Steuerdruckraum 15 erfolgt nur über die Düsenbohrung 37. Ein Abfluss von Steuerdruckmittel in Richtung der Stirnseite 35 wird durch das Rückschlagventil 45 verhindert. Man erhält den gewünschten Anstieg der Steuerdruckmittelmenge mit der über das Ventil geführten Druckmittelmenge.

Im Druckbegrenzungsbetrieb, bei einer Flussrichtung des Druckmittels A nach T, ist dagegen der Druck am Einlassaufsatzstück 47 höher als der Druck an der Düsenbohrung 37. Das Rückschlagventil 45, welches eine nur sehr schwache Feder besitzt, öffnet und erlaubt den Zustrom von Steuerdruckmittel in den Steuerdruckraum 15 aus dem Bereich vor der Stirnseite 35 des Steuerkolbens 11. Bei einem hohen Druckgefälle über den ersten Bundabschnitt 27 wäre ggf. alleine aus der Düsenbohrung 37 keine genügende Steuerdruckmittelversorgung mehr möglich, wodurch eine Verschlechterung der Druckbegrenzungsfunktion bzw. schlimmstenfalls ein Abriss der Steuerölversorgung und ein schlagartiges Wegbrechen des am Anschluss A gehaltenen Drucks erfolgen könnte. Durch den Zustrom von Steuerdruckmittel aus dem Bereich vor der Stirnseite 35, an dem sich wie gesagt ein erhöhter Druck anstaut, ist die zuverlässige Steuerdruckmittelversorgung sichergestellt. Die über das Einlassaufsatzstück 47 zugeführte Steuerdruckmittelmenge lässt sich über den Innendurchmesser des Düseneinsatzes 43 festlegen.

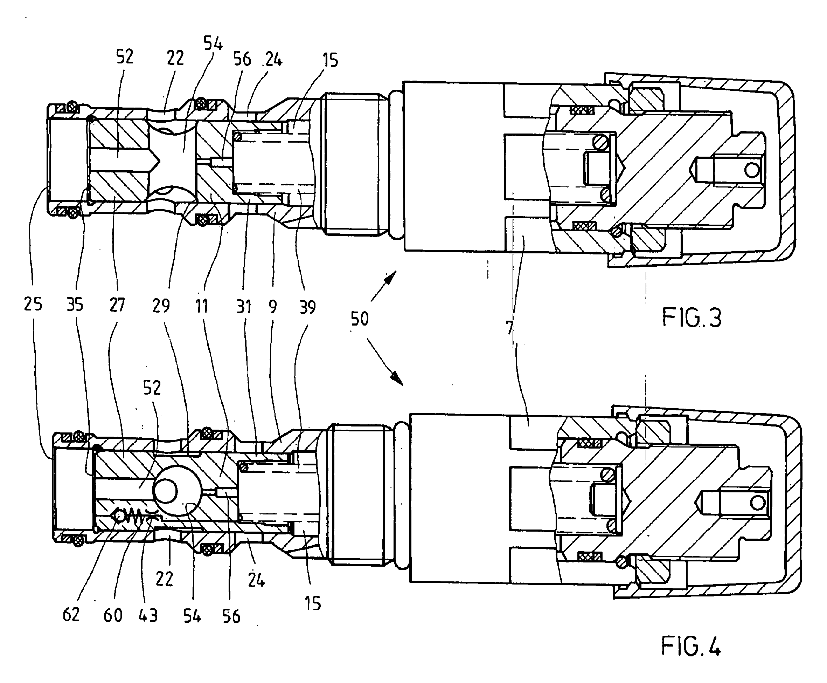

Ein weiteres Ausführungsbeispiel der vorliegenden Erfindung ist in den Figuren 3 und 4 anhand eines 3-Wege-Druckreduzierventils 50 dargestellt. Die Darstellung in Figur 4 ist gegenüber der Darstellung in Figur 3 um 90° um die Ventilachse gedreht. Das Druckreduzierventil 50 ist wie bei dem ersten Ausführungsbeispiel als Einschraubventil ausgeführt. Das 3-Wege-Druckreduzierventil 50 unterscheidet sich nur durch die Gestaltung des Steuerkolbens 11 von dem zuvor beschriebenen Druckreduzierventil 2. Es werden für gleiche Merkmale die gleichen Bezugszeichen verwendet. In der nachfolgenden Beschreibung des Druckreduzierventils 50 werden vornehmlich die besagten Unterschiede zum Druckreduzierventil 2 angegeben.

Der Steuerkolben 11 ist wiederum als gestufter Kolben mit einem ersten der Ventilbuchsenöffnung 25 zugewandten ersten Bundabschnitt 27, einem Halsabschnitt 29 und einem dem Steuerdruckraum 15 zugewandten zweiten Bundabschnitt 31 versehen. Der Druck im Steuerdruckraum 15 wird durch ein nicht dargestelltes Vorsteuerventil, vorzugsweise ein in der Befestigungshülse 7 angeordnetes Druckbegrenzungsventil eingestellt.

Im Gegensatz zu dem Druckreduzierventil 1 oder 2 springt der Halsabschnitt 29 bei dem Steuerkolben-11 des Druckreduzierventils 50 radial nur wenig zurück, so dass dieser auch als umlaufende Nut in der Mantelfläche des Steuerkolbens 11 angesehen werden kann. Der Halsabschnitt 29 ist von einer Radialbohrung 54, deren Durchmesser fast der Breite des Halsabschnittes 29 entspricht, durchdrungen. Anstelle eines Kranzes von axial ausgeführten Bohrungen 33 ist nur eine mittig angeordnete Axialbohrung 52 vorhanden, die von der Stirnfläche 35 ausgehend in die Radialbohrung 54 mündet. Der Durchmesser der Axialbohrung 52 ist dabei geringer als der Durchmesser der Radialbohrung 54. Eine weitere, gestufte Axialbohrung bildet den Steuerdruckmittelzufuhrkanal 56 im zweiten Bundabschnitt 31. Der der Radialbohrung 54 zugewandte Endabschnitt des Steuerdruckmittelzufuhrkanals 56 ist dabei als Düsenbohrung ausgeführt.

Wie in Figur 4 dargestellt, ist ein zusätzlicher, im Mantel des Steuerkolbens 11 ausgeführter Steuerdruckmittelzufuhrkanal 60 vorhanden. Dieser ist mit einem Düseneinsatz 43 und mit einem Rückschlagventil 62 versehen, welches bei entsprechenden Druckverhältnissen einen Einstrom von Steuerdruckmittel in den Steuerdruckraum 15 von der Stirnseite 35 her ermöglicht. Der Steuerdruckmittelzufuhrkanal 60 ist vorzugsweise als gestufte Axialbohrung ausgeführt.

Die Funktion des Druckreduzierventils 50 entspricht der Funktion des Druckreduzierventils 2. Bei einer Druckmittelstromrichtung von P nach A - im Druckreduzierbetrieb - entsteht durch die Verengung des Querschnittes an der Axialbohrung 52 ein Druckgefälle über den ersten Bundabschnitt 27. Druckmittel wird dabei stromauf des ersten Bundabschnitts 27 im Bereich des Halsabschnitts 29 gewissermaßen angestaut. Das Druckgefälle verstärkt sich mit steigender Druckmittelmenge. Mit steigender Druckmittelmenge nimmt folglich der an der Einlassöffnung des Steuerdruckmittelzufuhrkanals 56 anstehende Druck und damit die zugeführte Steuerdruckmittelmenge zu. Dies ermöglicht über die steigende Steuerdruckkennlinie die bereits beschriebene Kompensation der auf den Steuerkolben 11 einwirkenden Strömungskräfte und somit eine nahezu konstante Druckmittelmenge - Regeldruck - Kennlinie des Druckreduzierventils 50. In dieser Druckmittelstromrichtung bleibt das Rückschlagventil 62 geschlossen.

Bei einer Druckmittelstromrichtung von A nach T - im Druckbegrenzungsbetrieb - ermöglicht der zusätzliche mit dem Rückschlagventil 62 versehene Steuerdruckmittelzufuhrkanal 60 eine sichere Versorgung des Steuerdruckraums 15 mit Steuerdruckmittel. Dies trifft insbesondere auf hohe Druckmittelströme A nach T zu, bei denen aufgrund des sich über dem ersten Bundabschnitt 27 ausbildenden Druckgefälles eine sichere Druckmittelversorgung alleine über den Steuerdruckmittelzufuhrkanal 56 nicht möglich wäre..

Auch Kombinationen von Merkmalen aus dem ersten Ausführungsbeispiel mit Merkmalen aus dem zweiten Ausführungsbeispiel sollen von der Erfindung umfasst sein. So kann das Druckreduzierventil 50 ohne Weiteres als 2-Wege Druckreduzierventil ausgebildet werden, indem auf die Radialbohrungen 24 verzichtet wird. Dann ist auch der zusätzliche Steuerdruckmittelzufuhrkanal 60 mit dem Rückschlagventil 62 und dem Düseneinsatz 43 - vergleichbar dem Ausführungsbeispiel nach Figur 1 - entbehrlich. Auch ein 3-Wege Druckreduzierventil 50 kann bei Beschränkung der maximal zum Tank hin abzuführenden Volumina oder bei einer nur geringen Verengung des Strömungswegs durch die Axialbohrung 52 durchaus ohne den zusätzlichen Steuerdruckmittelzufuhrkanal 60, ohne das Rückschlagventil 62 und ohne den Düseneinsatz 43 ausgeführt werden.

### Bezugszeichenliste

- 1: Druckreduzierventil
- 2: Druckreduzierventil
- 3: Einschraubventil
- 4: Einbaubohrung
- 5: Ventilblock
- 7: Befestigungshülse
- 9: Ventilbuchse
- 11: Steuerkolben
- 12: Druckbegrenzungsventil
- 14: Sitzhülse
- 15: Steuerdruckraum
- 16: Steuerkegel
- 18: Druckfeder
- 20: Verstellhülse
- 21: Druckmittelzufuhrbereich
- 22: Radialbohrungen
- 23: Tankanschlussbereich
- 24: Radialbohrungen
- 25: Öffnung
- 27: erster Bundabschnitt
- 29: Halsabschnitt
- 31: zweiter Bundabschnitt
- 33: Axialbohrungen
- 34: Ringfläche
- 35: Stirnseite
- 36: Axialbohrung
- 37: Düsenbohrung
- 39: Druckfeder
- 41: Axialbohrung
- 43: Düseneinsatz
- 45: Rückschlagventil
- 47: Einlassaufsatzstück
- 50: Druckreduzierventil
- 52: Axialbohrung
- 54: Radialbohrung
- 56: Steuerdruckmittelzufuhrkanal mit Düsenbohrung
- 60: Steuerdruckmittelzufuhrkanal
- 62: Rückschlagventil
- A: Verbraucheranschluss
- P: Druckmittelquellenanschluss
- T: Tankanschluss

## Patentansprüche

1. Druckventil mit einer Ventilbuchse (9) und mit einem in der Ventilbuchse (9) beweglich geführten Steuerkolben (11), durch den ein über die Ventilbuchse (9) von einer Druckmittelquelle zu einem Verbraucher vorgesehener Druckmittelweg steuerbar ist, wobei am Steuerkolbens (11) ein Bundabschnitt (27) vorgesehen ist, durch den ein Öffnungsquerschnitt an einer druckmittelquellenseitigen Radialöffnung (22) der Ventilbuchse (9) veränderbar ist, und wobei der Druckmittelweg stromab der Radialöffnung (22) durch wenigstens einen sich axial durch den Bundabschnitt (27) erstreckenden Kanal (33; 52) geführt ist, ferner mit einer der Beaufschlagung des Steuerkolbens (11) mit einem einstellbaren Steuerdruck dienenden Vorsteueranordnung (12), wobei ein Steuerdruckmittelzufuhrkanal (36, 37; 56) mit einer Einlassöffnung am Steuerkolben (11) in einem Bereich stromauf des Bundabschnitts (27) vorgesehen ist,
**dadurch gekennzeichnet, dass**
der wenigstens eine sich axial erstreckende Kanal (33; 52) so dimensioniert ist, dass Druckmittel am Bundabschnitt (27) anstaubar ist.

2. Druckventil nach Anspruch 1, **dadurch gekennzeichnet, dass** der Steuerkolben (11) als gestufter Kolben ausgebildet ist und sich ausgehend von dem ersten, vorgenannten Bundabschnitt (27) in einen radial zurückspringenden Halsabschnitt (29) und anschließend in einen zweiten Bundabschnitt (31) axial fortsetzt.

3. Druckventil nach Anspruch 2, **dadurch gekennzeichnet, dass** der Steuerkolben (11) an beiden Bundabschnitten (27, 31) in der Ventilbuchse (9) geführt ist.

4. Druckventil nach Anspruch 2 oder 3, **dadurch gekennzeichnet, dass** der Steuerdruckmittelzufuhrkanal (36, 37; 56) von einer axial orientierten Fläche des zweiten Bundabschnitts (31) oder von einem Bereich des Halsabschnitts (29), insbesondere der Mantelfläche, nahe des zweiten Bundabschnitts (31) ausgeht.

5. Druckventil nach einem der Ansprüche 2 bis 4, **dadurch gekennzeichnet, dass** der zweite Bundabschnitt (31) einen Öffnungsquerschnitt an einer mit einer Entlastungsleitung fluidisch verbundenen Radialöffnung (24) der Ventilbuchse (9) steuert.

6. Druckventil nach Anspruch 5, **dadurch gekennzeichnet, dass** ein zweiter Steuerdruckmittelzufuhrkanal (41; 60) vorgesehen ist, der eine Einlassöffnung an einer dem Halsabschnitt (29) abgewandten Seite (35) des ersten Bundabschnitts (27) besitzt.

7. Druckventil nach Anspruch 6, **dadurch gekennzeichnet, dass** im zweiten Steuerdruckmittelzufuhrkanal (41; 60) ein Rückschlagventil (45; 62) angeordnet ist, welches gemäß seiner Durchlassrichtung einen Einstrom von Druckmittel an der Einlassöffnung des zweiten Steuerdruckmittelzufuhrkanals (41; 60) erlaubt.

8. Druckventil nach Anspruch 7, **dadurch gekennzeichnet, dass** der zweite Steuerdruckmittelzufuhrkanal in den ersten Steuerdruckmittelzufuhrkanal mündet.

9. Druckventil nach Anspruch 8, **dadurch gekennzeichnet, dass** eine den Steuerkolben (11) axial durchlaufende Bohrung (41) abschnittsweise zur Ausbildung des ersten Steuerdruckmittelzufuhrkanals und des zweiten Steuerdruckmittelzufuhrkanals vorgesehen ist.

10. Druckventil nach Anspruch 9, **dadurch gekennzeichnet, dass** die Einlassöffnung des ersten Steuerdruckmittelzufuhrkanals durch eine in die Axialbohrung (41) mündende Radialbohrung (37) gebildet ist.

11. Druckventil nach einem der Ansprüche 1 bis 10, **dadurch gekennzeichnet, dass** in dem Bundabschnitt (27) umlaufend mehrere durchgängige Axialbohrungen (33) vorgesehen sind, die in einer dem Halsabschnitt (29) zugewandten Ringfläche (34) des Bundabschnitts (27) münden.

12. Druckventil nach einem der Ansprüche 2 bis 10, **dadurch gekennzeichnet, dass** in dem Halsabschnitt (29) eine durchgehende Radialbohrung (54) ausgeführt ist, dass in dem ersten Bundabschnitt (27) eine in die besagte Radialbohrung (54) mündende Axialbohrung (52) vorgesehen ist, und dass der Durchmesser der Axialbohrung (52) geringer als der Durchmesser der Radialbohrung (54) ist.

13. Druckventil nach einem der vorangehenden Ansprüche, **dadurch gekennzeichnet, dass** die Vorsteueranordnung (12) bei einem Anstieg der ihr zugeführten Steuerdruckmittelmenge einen steigenden Steuerdruck verursacht.

14. Druckventil nach einem der vorangehenden Ansprüche, **dadurch gekennzeichnet, dass** die Vorsteueranordnung ein direkt betätigtes Druckbegrenzungsventil (12) umfasst.

## Claims

1. Pressure valve, with a valve bush (9) and with a control piston (11) which is guided movably in the valve bush (9) and by means of which a pressure-medium path provided via the valve bush (9) from a pressure-medium source to a consumer can be controlled, there being provided on the control piston (11) a collar portion (27), by means of which an orifice cross section at a radial orifice (22), located on the pressure-medium source side, of the valve bush (9) can be varied, and the pressure-medium path being routed, downstream of the radial orifice (22), through at least one duct (33; 52) extending axially through the collar portion (27), furthermore with a pilot control arrangement (12) serving for acting upon the control piston (11) with an adjustable control pressure, a control pressure-medium supply duct (36, 37; 56) with an inlet orifice on the control piston (11) being provided in a region upstream of the collar portion (27),
**characterized in that**
the at least one axially extending duct (33; 52) is dimensioned so that pressure medium can be built up at the collar portion (27).

2. Pressure valve according to Claim 1, **characterized in that** the control piston (11) is designed as a stepped piston and is continued axially from the first abovementioned collar portion (27) into a radially set-back neck portion (29) and thereafter into a second collar portion (31).

3. Pressure valve according to Claim 2, **characterized in that** the control piston (11) is guided in the valve bush (9) at the two collar portions (27, 31).

4. Pressure valve according to Claim 2 or 3, **characterized in that** the control pressure-medium supply duct (36, 37; 56) emanates from an axially oriented face of the second collar portion (31) or from a region of the neck portion (29), in particular of the surface area, near the second collar portion (31).

5. Pressure valve according to one of Claims 2 to 4, **characterized in that** the second collar portion (31) controls an orifice cross section at a radial orifice (24) of the valve bush (9), the said radial orifice being connected fluidically to a relief line.

6. Pressure valve according to Claim 5, **characterized in that** a second control pressure-medium supply duct (41; 60) is provided, which possesses an inlet orifice on a side (35) of the first collar portion (27) which faces away from the neck portion (29).

7. Pressure valve according to Claim 6, **characterized in that**, in the second control pressure-medium supply duct (41; 60), a non-return valve (45; 62) is arranged, which, according to its passage direction, allows an inflow of pressure medium at the inlet orifice of the second control pressure-medium supply duct (41; 60).

8. Pressure valve according to Claim 7, **characterized in that** the second control pressure-medium supply duct issues into the first control pressure-medium supply duct.

9. Pressure valve according to Claim 8, **characterized in that** a bore (41) running axially through the control piston (11) is provided partially for forming the first control pressure-medium supply duct and the second control pressure-medium supply duct.

10. Pressure valve according to Claim 9, **characterized in that** the inlet orifice of the first control pressure-medium supply duct is formed by a radial bore (37) issuing into the axial bore (41).

11. Pressure valve according to one of Claims 1 to 10, **characterized in that** a plurality of axial through-bores (33) are provided peripherally in the collar portion (27) and issue in an annular face (34) of the collar portion (27), the said annular face facing the neck portion (29).

12. Pressure valve according to one of Claims 2 to 10, **characterized in that** a continuous radial bore (54) is formed in the neck portion (29), **in that** an axial bore (52) issuing into the said radial bore (54) is provided in the first collar portion (27), and **in that** the diameter of the axial bore (52) is smaller than the diameter of the radial bore (54).

13. Pressure valve according to one of the preceding claims, **characterized in that**, in the event of a rise in the control pressure-medium quantity supplied to the pilot control arrangement (12), the latter causes a rising control pressure.

14. Pressure valve according to one of the preceding claims, **characterized in that** the pilot control arrangement comprises a directly actuated pressure-limiting valve (12).

## Revendications

1. Soupape de pression comprenant une douille de soupape (9) et un piston de commande (11) guidé de manière déplaçable dans la douille de soupape (9), à travers lequel un flux de fluide de pression prévu à travers la douille de soupape (9) depuis une source de fluide de pression jusqu'à un compresseur peut être commandé, une portion d'épaulement (27) étant prévue sur le piston de commande (11), lequel permet de modifier une section transversale d'ouverture au niveau d'une ouverture radiale (22) de la douille de soupape (9) du côté de la source de fluide de pression, et le flux de fluide de pression étant guidé en aval de l'ouverture radiale (22) à travers au moins un canal (33 ; 52) s'étendant axialement à travers la portion d'épaulement (27), et comprenant en outre un agencement de commande pilote (12) servant à solliciter le piston de commande (11) avec une pression de commande ajustable, un canal d'alimentation en fluide de pression de commande (36, 37 ; 56) étant prévu avec une ouverture d'entrée au niveau du piston de commande (11) dans une région en amont de la portion d'épaulement (27),
**caractérisée en ce que**
l'au moins un canal (33 ; 52) s'étendant axialement est dimensionné de telle sorte que lé fluide de pression puisse être retenu au niveau de la portion d'épaulement (27).

2. Soupape de pression selon la revendication 1, **caractérisée en ce que** le piston de commande (11) est réalisé sous forme de piston étagé et se prolonge axialement à partir de la première portion d'épaulement susmentionnée (27) dans une portion de col revenant radialement par ressort (29) et ensuite dans une deuxième portion d'épaulement (31).

3. Soupape de pression selon la revendication 2, **caractérisée en ce que** le piston de commande (11) est guidé au niveau des deux portions d'épaulement (27, 31) dans la douille de soupape (9).

4. Soupape de pression selon la revendication 2 ou 3, **caractérisée en ce que** le canal d'alimentation en fluide de pression de commande (36, 37 ; 56) part d'une surface orientée axialement de la deuxième portion d'épaulement (31) ou d'une région de la portion de col (29), notamment de la surface d'enveloppe, à proximité de la deuxième portion d'épaulement (31).

5. Soupape de pression selon l'une quelconque des revendications 2 à 4, **caractérisée en ce que** la deuxième portion d'épaulement (31) commande une section transversale d'ouverture au niveau d'une ouverture radiale (24) de la douille de soupape (9) connectée fluidiquement à une conduite de décharge.

6. Soupape de pression selon la revendication 5, **caractérisée en ce qu'**un deuxième canal d'alimentation en fluide de pression de commande (41 ; 60) est prévu, lequel possède une ouverture d'entrée au niveau d'un côté (35) de la première portion d'épaulement (27) opposé à la portion de col (29).

7. Soupape de pression selon la revendication 6, **caractérisée en ce que** dans le deuxième canal d'alimentation en fluide de pression de commande (41 ; 60) est disposée une soupape de non retour (45 ; 62), qui permet selon son sens de passage, un afflux de fluide de pression au niveau de l'ouverture d'entrée du deuxième canal d'alimentation en fluide de pression de commande (41 ; 60).

8. Soupape de pression selon la revendication 7, **caractérisée en ce que** le deuxième canal d'alimentation en fluide de pression de commande débouche dans le premier canal d'alimentation en fluide de pression de commande.

9. Soupape de pression selon la revendication 8, **caractérisée en ce qu'**un alésage (41) traversant axialement le piston de commande (11) est prévu en partie pour réaliser le premier canal d'alimentation en fluide de pression de commande et le deuxième canal d'alimentation en fluide de pression de commande.

10. Soupape de pression selon la revendication 9, **caractérisée en ce que** l'ouverture d'entrée du premier canal d'alimentation en fluide de pression de commande est formée par un alésage radial (37) débouchant dans l'alésage axial (41).

11. Soupape de pression selon l'une quelconque des revendications 1 à 10, **caractérisée en ce que** plusieurs alésages axiaux continus (33) sont prévus sur la périphérie de la portion d'épaulement (27), lesquels débouchent dans une surface annulaire (34) de la portion d'épaulement (27) tournée vers la portion de col (29).

12. Soupape de pression selon l'une quelconque des revendication 2 à 10, **caractérisée en ce qu'**un alésage radial continu (54) est réalisé dans la portion de col (29), **en ce que** dans la première portion d'épaulement (27) est prévu un alésage axial (52) débouchant dans ledit alésage radial (54), et **en ce que** le diamètre de l'alésage axial (52) est plus petit que le diamètre de l'alésage radial (54).

13. Soupape de pression selon l'une quelconque des revendications précédentes, **caractérisée en ce que** l'agencement de commande pilote (12) provoque une pression de commande croissante lors d'une augmentation de la quantité de fluide de pression de commande qui lui est acheminée.

14. Soupape de pression selon l'une quelconque des revendications précédentes, **caractérisée en ce que** l'agencement de commande pilote comprend une soupape de limitation de pression (12) à commande directe.
